# EUROPEAN PATENT APPLICATION

(11) **EP 2 131 585 A1**
(43) Date of publication of application: **09.12.2009**
(21) Application number: 08739743.6
(22) Date of filing: 27.03.2008
(51) Int. Cl.: H04N 7/173, G06F 13/00, H04N 7/26

(54) **CONTENT DISTRIBUTION SYSTEM, CONTENT DISTRIBUTION METHOD, AND TRANSLATOR FOR USE IN THEM**

(30) Priority: 04.04.2007 JP 2007097913
(71) Applicant: NEC Corporation, Minato-ku Tokyo 108-8001 (JP)
(72) Inventor: OZAWA, Kazunori, Tokyo 108-8001 (JP)
(74) Representative: Vossius & Partner
(86) International application number: PCT/JP2008/056633
(87) International publication number: WO 2008/123568

(57) **Abstract**

A transcoder 22 receives encoded streams of image contents and decoding information in pluralities of sorts, and it once decodes the respective image contents by using the encoded streams and the decoding information. The transcoder 22 subjects each of the decoded images to the reduction or enlargement of a screen size and synthesizes the resulting images into one image, it re-encodes the synthesized image, and it outputs the stream and the decoding information after the re-encoding, to a transmission unit 23. The transmission unit 23 receives the re-encoded decoding information and the re-encoded stream from the transcoder 22 and outputs them to a terminal 3 through a transmission line 102.

## Description

### Technical Field

The present invention relates to a content delivery system, a content delivery method and a conversion apparatus for use in them.

### Background Art

In recent years, as a content delivery method, the delivery of contents containing an image (especially, a moving picture) and audio has been widening in a broadband environment or a mobile environment (refer to, for example, Patent Document 1: JP-A-2005-033664, and Patent Document 2: JP-A-2006-246008). When a plurality of contents are to be viewed, they are sequentially done in such a way that one content is viewed, and that, after the content has ended, the next content is viewed.

Also, in case of inserting an advertisement content into an image content as in the free-charge delivery of contents, as soon as the image content has ended, it is changed-over to the advertisement content so as to deliver this advertisement content (refer to, for example, Patent Document 3: JP-A-2001-175570, Patent Document 4: JP-A-2003-006085, and Patent Document 5: JP-A-2003-289521).

### Summary of the Invention

In the content delivery stated above, as a method for changing-over the image content to the next image content or for changing-over the image content to the advertisement content, there has been known a method wherein the image contents are changed-over at a certain temporal timing within an identical delivery server, or a method wherein an image server in which the image content is stored, and an advertisement server in which the advertisement content is stored, are changed-over at a certain temporal timing.

With such a method, in changing-over the contents or in changing-over the servers, a series of invocation processes, such as the alteration of an IP (Internet Protocol) address and the alteration of a port number, are executed in order to alter the content or to alter a connection route. In addition, the image flows after such processes have ended, and hence, there is the problem that a processing delay arises. In the case of such a method, accordingly, an end user sometimes performs a disconnection process because the end user cannot keep waiting.

Therefore, the present invention is intended to eliminate the above problem, and to provide a content delivery system and a content delivery method in which, in delivering a plurality of contents accumulated in a delivery server, at least one of the contents can be synthesized and delivered, or at least one of the contents and an advertisement content can be synthesized and delivered.

The present invention is also intended to provide a conversion apparatus which is suited to the above content delivery system and content delivery method.

A content delivery system according to the present invention delivers a plurality of contents to a terminal through a network. In accordance with an aspect of the present invention, the content delivery system incudes a delivery server configured to deliver the plurality of contents to the terminal, and a conversion apparatus configured to synthesize the plurality of contents delivered from the delivery server, and output the synthesized contents to the terminal.

In addition, the delivery server may deliver at least one of advertisement contents in addition to the plurality of contents. In this case, the conversion apparatus synthesizes at least one of the plurality of contents and the advertisement content which are delivered from the delivery server, and outputs the synthesized contents to the terminal.

A conversion apparatus according to the present invention is used in a content delivery system that delivers a plurality of contents to a terminal through a network. In accordance with an aspect of the present invention, the conversion apparatus comprises a processing unit that synthesizes the received plurality of contents, and outputs the synthesized contents to the terminal.

In addition, the content delivery system may deliver at least one of advertisement contents in addition to the plurality of contents. In this case, the processing unit synthesizes at least one of the received plurality of contents and the received advertisement content, and outputs the synthesized contents to the terminal.

A content delivery method according to the present invention delivers a plurality of contents delivered from a delivery server to a terminal through a network. In accordance with an aspect of the invention, the content delivery method comprises synthesizing the plurality of contents delivered from the delivery server, and outputting the synthesized contents to the terminal.

In addition, the delivery server may deliver at least one of advertisement contents in addition to the plurality of contents. In this case, the content delivery method comprises synthesizing at least one of the plurality of contents and the advertisement content delivered from the delivery server, and outputting the synthesized contents to the terminal.

A content delivery system according to another aspect of the present invention includes a conversion apparatus including an image transcoder, and in a case where images to be delivered are converted in real time in order to be synthesized, thereby to deliver image contents, and where the plurality of image contents are to be simultaneously viewed in an identical session, the content delivery system can synthesize the images and then deliver the synthesized image to a terminal, or in a case where both image contents and advertisement contents are delivered, the content delivery system can synthesize both the contents and then deliver the synthesized content to a terminal.

The content delivery system according to the present invention is **characterized in that** at least one of contents which contain at least one of a moving picture, a static picture, voice, and audio, is outputted from a delivery server to the conversion apparatus, and that the conversion apparatus executes a process for synthesizing images of the contents, so as to output the synthesized image to the terminal.

In a case where a plurality of image contents or both image contents and advertisement contents are delivered from the delivery server to the terminal in an identical session, the conversion apparatus executes an image synthesis process so that the plurality of image contents can be simultaneously delivered to the terminal.

In concrete description, the conversion apparatus uses the image transcoder to convert screen sizes of the plurality of image contents, to synthesize the image contents into one image and then re-encode the synthesized image, and to transmit the image stream after the re-encoding, to the terminal. Also in the case where the image contents and images of the advertisement contents are synthesized, the conversion apparatus executes the same synthesis process as in the above, by using the image transcoder.

Thus, in the content delivery system of the present invention, in the case where contents containing a plurality of images are delivered, the conversion apparatus is included, whereby the contents containing the images can be synthesized and delivered, so that the plurality of contents can be simultaneously displayed at the terminal without any remodeling to the terminal.

Besides, in the content delivery system of the present invention, in the case where contents containing images and advertisement contents are delivered, the conversion apparatus is included, whereby the contents containing the images and the advertisement contents can be synthesized and delivered, so that the synthesized content can be delivered without changing-over delivery servers, and a switching time can be nullified. In this case, the contents containing the images and the advertisement contents can be simultaneously displayed at the terminal without any remodeling to the terminal.

Further, in the content delivery system of the present invention, in the case where contents containing a plurality of images are delivered, the conversion apparatus is included, and at the movement of the terminal, the contents containing the images can be synthesized and delivered while being changed-over for, for example, respective regional zones, so that the plurality of contents can be simultaneously displayed at the terminal while a value added by the movement of the terminal is attained without any remodeling to the terminal.

Still further, in the content delivery system of the present invention, in the case where contents containing images and advertisement contents are delivered, the conversion apparatus is included, whereby the contents containing the images and the advertisement contents can be synthesized and delivered, and at the movement of the terminal, the contents containing the images or the advertisements can be synthesized and delivered while being changed-over for, for example, respective regional zones, so that a switching time for changing-over delivery servers is not involved, and the contents containing the images and the advertisement contents can be simultaneously displayed at the terminal without any remodeling to the terminal.

As thus far described, in accordance with the present invention, owing to the configurations and operations as stated above, in the case where image contents are delivered and where the plurality of image contents are to be simultaneously viewed in an identical session, there is brought forth the advantage that the images can be synthesized and then delivered to the terminal, and in the case where both image contents and advertisement contents are delivered, there is brought forth the advantage that both the contents can be synthesized and then delivered to a terminal.

### Brief Description of the Drawings

FIG. 1 is a block diagram showing a configurational example of a content delivery system according to the first exemplary embodiment of the present invention.
FIG. 2 is a block diagram showing the detailed configuration of a transcoder shown in FIG. 1.
FIG. 3 is a block diagram showing a configurational example of a content delivery system according to the second exemplary embodiment of the present invention.
FIG. 4 is a block diagram showing a configurational example of a content delivery system according to the third exemplary embodiment of the present invention.
FIG. 5 is a block diagram showing a configurational example of a content delivery system according to the fourth exemplary embodiment of the present invention.

### Description of the Exemplary Embodiments of the Invention

Next, exemplary embodiments of the present invention will be described with reference to the drawings.

### [First Exemplary Embodiment]

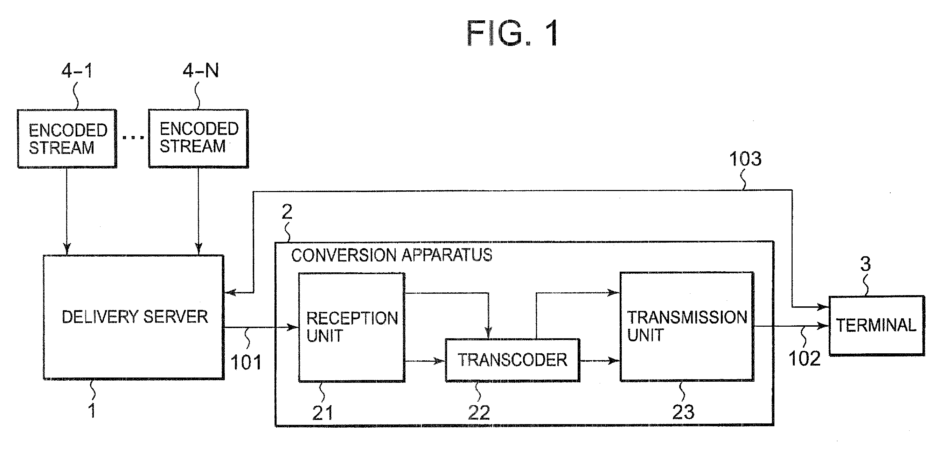

FIG. 1 is a block diagram showing a configurational example of a content delivery system according to the first exemplary embodiment of the present invention. Referring to FIG. 1, the content delivery system according to the first exemplary embodiment of the present invention includes a delivery server 1, and a conversion apparatus 2. The delivery server 1 and the conversion apparatus 2 are connected through a transmission line 101, while the conversion apparatus 2 and a terminal 3 are connected through a transmission line 102. The delivery server 1 and the terminal 3 are connected through a transmission line 103.

The delivery server 1 accumulates and delivers a plurality of sorts of encoded streams 4-1 through 4-N (N being a positive integer) into which contents containing images have been encoded beforehand. Here, ITU-T (International Telecommunication Union-Telecommunication Standardization Sector) Standard H. 263 or H. 264 or MPEG (Moving Picture Expert Group) Standard MPEG-4, for example, can be used as image encoding for encoding the image contents, but any other encoding scheme can also be used. In the first exemplary embodiment, the number of the contents is set at N, but any desired number of at least two can be taken.

The terminal 3 makes a request connection to the delivery server 1, and selects at least one content to-be-delivered. Here, the terminal 3 is connected to any of the networks of an IP (Internet Protocol) network, a mobile network, a radio LAN (Local Area Network), etc. Further, in case of the IP network, the terminal can be used in either of unicast and multicast.

The delivery server 1 transmits to the conversion apparatus 2, at least one moving picture data selected at the terminal 3 and the decoding information [for example, DCI (Decoder Configuration Information)] of the moving picture data. Besides, the delivery server 1 notifies a method for connection to the conversion apparatus 2 (an IP address and a port number), to the terminal 3 through the transmission line 103.

The conversion apparatus 2 is configured of a reception unit 21, a transcoder (processing unit) 22 and a transmission unit 23. The reception unit 21 receives the decoding information and encoded streams for a plurality of contents, through the transmission line 101 from the delivery server 1, and it outputs the received decoding information and encoded streams (for the plurality of contents), to the transcoder 22.

The transcoder 22 receives the encoded streams of the image contents and the decoding information in a plurality of sorts (for example, four sorts), and it once decodes the respective image contents by using the received encoded streams and decoding information. Besides, the transcoder 22 subjects each of the decoded images to the reduction (or enlargement) of a screen size and synthesizes the resulting images into one image, it re-encodes the synthesized image, and it outputs the re-encoded stream and decoding information to the transmission unit 23. Here, the conversion by the transcoder 22 may be always performed, or it may well be done only in case of the reception of an instruction from the terminal 3, in a predetermined case, or in case of the reception of an instruction from the network.

The transmission unit 23 receives the converted decoding information and the converted encoded stream from the transcoder 22, and it outputs them to the terminal 3 through the transmission line 102. Here, when the decoding information is to be notified to the terminal 3 through the transmission line 102, it is notified using, for example, ITU-T Recommendation H. 245 Protocol in a case where the transmission line 102 is of circuit switching. In a case where the transmission line 102 is of packet switching, the decoding information is contained in IETF (Internet Engineering Task Force) Recommendation SDP (Session Definition Protocol) [IETF RFC (Request For Comments) 2327, RFC 3264 or RFC 3984] and is notified to the terminal 3.

Here, the transmission line 102 can use any of the networks of an IP network, a mobile network, a radio LAN, etc. Further, in case of the IP network, the transmission line can be used in either of unicast and multicast.

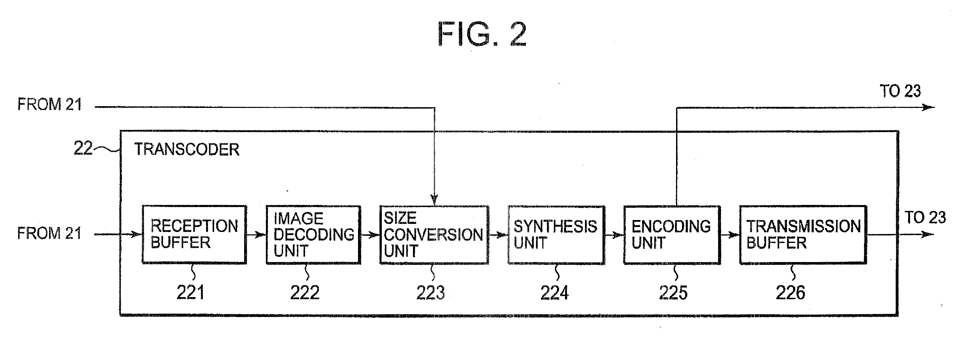

FIG. 2 is a block diagram showing the detailed configuration of the transcoder 22 shown in FIG. 1. Referring to FIG. 2, the transcoder 22 is configured of a reception buffer 221, a image decoding unit 222, a size conversion unit 223, a synthesis unit 224, an encoding unit 225 and a transmission buffer 226.

The reception buffer 221 once accumulates the encoded stream received from the reception unit 21. The encoded stream is delimited every image packet or every image frame, and is then outputted to the image decoding unit 222. The image decoding unit 222 receives the decoding information and the plurality of sorts of encoded streams, and it decodes the respective encoded streams and outputs the decoded streams to the size conversion unit 223.

The size conversion unit 223 reduces each of the plurality of decoded images at, for example, a predetermined ratio and then outputs the reduced image to the synthesis unit 224. The synthesis unit 224 receives the plurality of decoded images from the size conversion unit 223, and it synthesizes the decoded images into one picture and then outputs the picture to the encoding unit 225.

The encoding unit 225 encodes the output picture from the synthesis unit 224, and it outputs the encoded stream after the conversion, to the transmission buffer 226. Besides, the encoding unit 225 outputs the decoding information (for example, a predetermined DCI value) after the conversion.
The transmission buffer 226 outputs the stream after the encoding, to the transmission unit 23.

In this manner, the first exemplary embodiment includes the conversion apparatus 2 in which, in the case where the contents containing the plurality of images are delivered by the delivery system, the transcoder 22 is used to convert the screen sizes of the plurality of image contents and to synthesize the image contents into one image and then re-encode the synthesized image, whereupon the image stream after the re-encoding is transmitted to the terminal 3. Thus, the contents containing the images can be synthesized and delivered, so that the plurality of contents can be simultaneously displayed at the terminal 3 without any remodeling to the terminal 3.

### [Second Exemplary Embodiment]

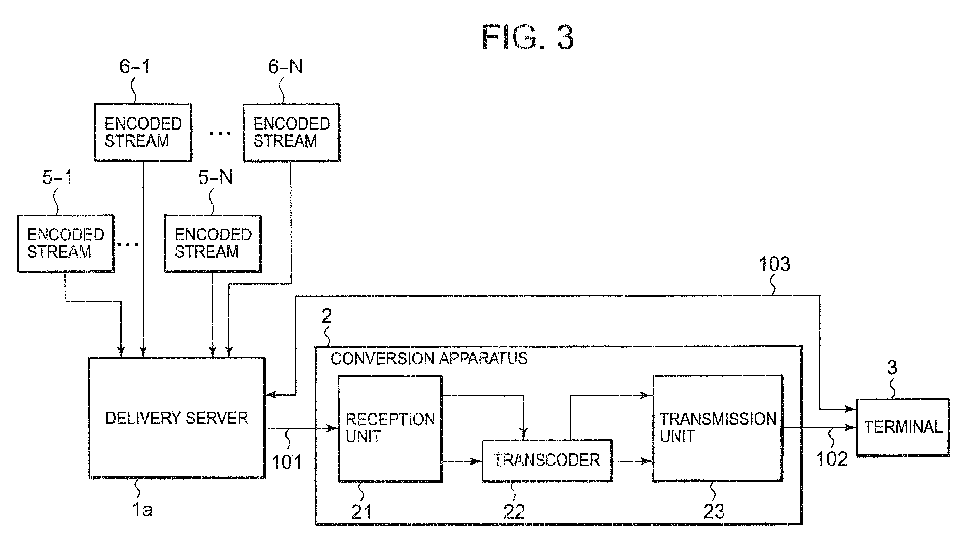

FIG. 3 is a block diagram showing a configurational example of a content delivery system according to the second exemplary embodiment of the present invention. Referring to FIG. 3, the content delivery system according to the second exemplary embodiment of the present invention has the same configuration as that of the content delivery system according to the first exemplary embodiment as shown in FIG. 1, except that the encoded streams 5-1 through 5-N of a plurality of image contents and the encoded streams 6-1 through 6-N of a plurality of advertisement contents are inputted to a delivery server 1a. Therefore, constituents identical to the constituents shown in FIG. 1 are assigned identical reference numerals. Besides, since the operations of the identical constituents are the same as in the first exemplary embodiment, the description thereof will be omitted.

The delivery server 1 a receives the encoded streams 5-1 through 5-N of the plurality of image contents and the encoded streams 6-1 through 6-N of the plurality of advertisement contents, and delivers them to a terminal 3.

A conversion apparatus 2 receives the encoded streams concerning the plurality of image contents, the encoded streams concerning the plurality of advertisement contents, and the decoding information of the respective streams, from the delivery server 1a, and it synthesizes the streams of the image contents and the streams of the advertisement contents, so as to output the synthesized stream to the terminal 3.

In this manner, the second exemplary embodiment includes the conversion apparatus 2 in which, in the case where the contents containing images and the advertisement contents are delivered, a transcoder 22 is used to convert the screen sizes of the contents containing the plurality of images and the advertisement contents and to synthesize the contents into one image and then re-encode the synthesized image, whereupon the image stream after the re-encoding is transmitted to the terminal 3. Thus, at least one of the contents containing the image and at least one of the advertisement contents can be synthesized and delivered, so that a switching time for switching the delivery server is unnecessary. Moreover, the contents containing the images and the advertisement contents can be simultaneously displayed at the terminal 3 without any remodeling to the terminal 3.

### [Third Exemplary Embodiment]

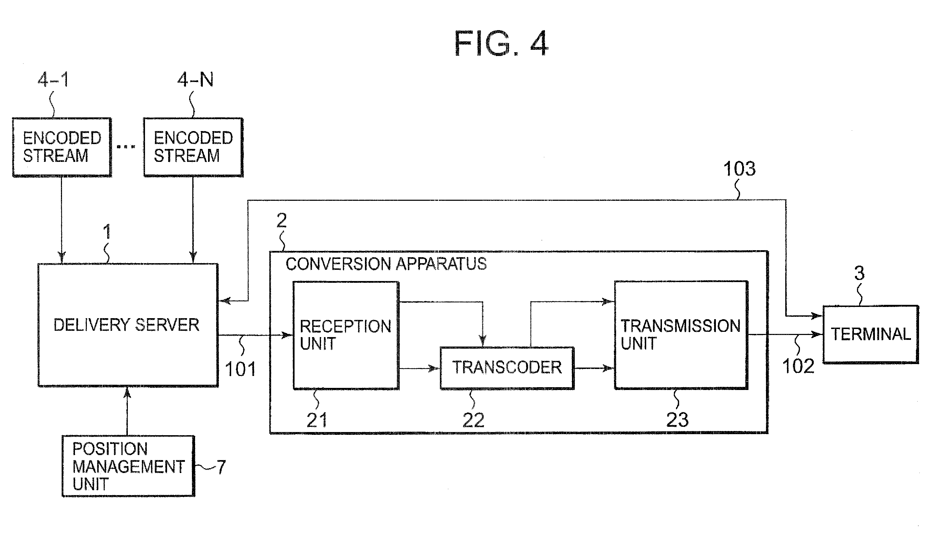

FIG. 4 is a block diagram showing a configurational example of a content delivery system according to the third exemplary embodiment of the present invention. Referring to FIG. 4, the content delivery system according to the third exemplary embodiment of the present invention has the same configuration as that of the content delivery system according to the first exemplary embodiment as shown in FIG. 1, except that a position management unit 7 is provided. Therefore, constituents identical to the constituents shown in FIG. 1 are assigned identical reference numerals and signs. Besides, since the operations of the identical constituents are the same as in the first exemplary embodiment, the description of the operations will be omitted.

The position management unit 7 manages where the position of a terminal 3 exists. In a case where the terminal 3 is a mobile terminal and where it is connected to, for example, a 3G (3rd Generation) mobile network, the position management unit 7 receives information from an HLR (Home Location Register) and an HSS (Home Subscriber Server) and manages the position of the terminal 3 by using the information thereof. Incidentally, the HLR is a database which retains service subscription information, position information, authentication information, etc. therein, and the HSS is a server which is furnished with a subscriber identification function, a user authentication function, etc. necessary for an IMS (IP Multimedia Subsystem), in addition to the above HLR function.

Besides, in a case, for example, where the terminal 3 is connected to a W-LAN (Wideband-Local Area Network), the position management unit 7 may manage information from an access point.

By way of example, a delivery server 1 classifies the whole country into a plurality of zones and retain the encoded streams 4-1 through 4-N of a plurality of image contents for the respective zones. The delivery server 1 checks the position information of the terminal 3 as is sent from the position management unit 7, and in a case where the terminal 3 has moved to change its position and to enter the predetermined zone, this delivery server changes over at least one of the encoded streams of the image contents to a peculiar one within the pertinent zone, and it outputs the encoded stream of the pertinent content and decoding information to a conversion apparatus 2.

In this manner, the third exemplary embodiment includes the conversion apparatus 2 in which, in the case where the contents containing the plurality of images are delivered by the delivery system, a transcoder 22 is used to convert the screen sizes of the plurality of image contents and to synthesize the contents into one image and then re-encode the synthesized image, whereupon the image stream after the re-encoding is transmitted to the terminal 3, and the position management unit 7 which manages where the terminal 3 exists. Thus, when the terminal 3 has moved, the contents containing the images for, for example, the respective regional zones can be synthesized and delivered while being changed over, so that the plurality of contents can be simultaneously displayed at the terminal 3 while a value added by the movement of the terminal 3 is attained without any remodeling to the terminal 3.

### [Fourth Exemplary Embodiment]

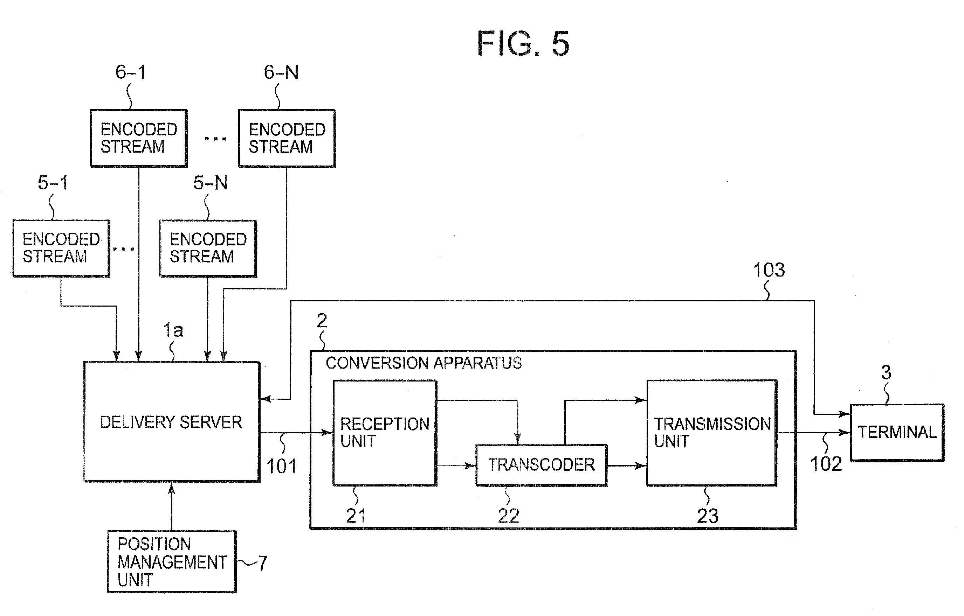

FIG. 5 is a block diagram showing a configurational example of a content delivery system according to the fourth exemplary embodiment of the present invention. Referring to FIG. 5, the content delivery system according to the fourth exemplary embodiment of the present invention has the same configuration as that of the content delivery system according to the second exemplary embodiment as shown in FIG. 3, except that a position management unit 7 is provided. Therefore, constituents identical to the constituents shown in FIG. 3 are assigned identical reference numerals and signs. Besides, since the operations of the identical constituents are the same as in the second exemplary embodiment, the description of the operations will be omitted.

Likewise to the position management unit 7 of the content delivery system according to the third exemplary embodiment shown in FIG. 4, the position management unit 7 manages where a terminal 3 exists.

By way of example, a delivery server 1 a classifies the whole country into a plurality of zones and retain the encoded streams 5-1 through 5-N of a plurality of image contents and the encoded streams 6-1 through 6-N of a plurality of advertisement contents for the respective zones.

The delivery server 1a checks the position information of the terminal 3 as is sent from the position management unit 7, and in a case where the terminal 3 has moved to change its position and to enter the predetermined zone, this delivery server changes over at least one of the encoded streams of the image contents and the encoded streams of the advertisement contents to a peculiar one within the pertinent zone, and it outputs to a conversion apparatus 2, the encoded stream of the pertinent content as well as the encoded stream of the advertisement content and the decoding information of the respective encoded streams.

In this manner, the fourth exemplary embodiment includes the conversion apparatus 2 in which, in the case where the contents containing the images and the advertisement contents are delivered, a transcoder 22 is used to convert the screen sizes of the contents containing the plurality of images and the advertisement contents and to synthesize the contents into one image and then re-encode the synthesized image, whereupon the image stream after the re-encoding is transmitted to the terminal 3, and the position management unit 7 which manages where the terminal 3 exists. Thus, at least one of the contents containing the image and at least one of the advertisement contents can be synthesized and delivered, and when the terminal 3 has moved, the contents containing the images and the advertisements can be synthesized and delivered while being changed over for, for example, the respective regional zones, so that a switching time for switching the delivery server is unnecessary. Moreover, the contents containing the images and the advertisement contents can be simultaneously displayed at the terminal 3 without any remodeling to the terminal 3.

While the present invention has been particularly shown and described with reference to exemplary embodiments thereof, the present invention is not limited to these embodiments. It will be understood by those of ordinary skill in the art that various changes in form and details may be made therein without departing from the sprit and scope of the present invention as defined by the claims.

This application is based upon and claims the benefit of priority from Japanese patent application No. 2007-97913, filed on April 4, 2007, the disclosure of which is incorporated herein in its entirety by reference.

## Claims

1. A content delivery system for delivering a plurality of contents to a terminal through a network, the system comprising:
a delivery server configured to deliver the plurality of contents; and
a conversion apparatus configured to synthesize the plurality of contents delivered from the delivery server, and output the synthesized contents to the terminal.

2. The content delivery system as defined in claim 1, wherein the plurality of contents includes images and the conversion apparatus synthesizes the images of the plurality of contents.

3. The content delivery system as defined in claim 2, wherein the conversion apparatus converts screen sizes of the images of the plurality of contents, synthesizes the converted images of the plurality of contents into one image, re-encodes the image, and then outputs the image stream after the re-encoding, to the terminal.

4. The content delivery system as defined in claim 1, wherein:
the delivery server delivers at least one of advertisement contents in addition to the plurality of contents; and
the conversion apparatus synthesizes at least one of the plurality of contents and the advertisement content which are delivered from the delivery server, and outputs the synthesized contents to the terminal.

5. The content delivery system as defined in claim 4, wherein the plurality of contents and the advertisement content include images; and the conversion apparatus synthesizes at least one of the images of the plurality of contents and the image of the advertisement content.

6. The content delivery system as defined in claim 5, wherein the conversion apparatus converts screen sizes of the at least one of the images of the plurality of contents and the image of the advertisement content, synthesizes at least one of the converted images of the plurality of contents and the converted image of the advertisement content into one image, re-encodes the image, and then outputs the image stream after the re-encoding, to the terminal.

7. The content delivery system as defined in any one of claims 1-6, the system further comprising a position management unit configured to manage a position of the terminal, and wherein when the terminal has moved, the delivery server changes the contents on the basis of position information of the terminal from the position management unit, so as to deliver the changed content.

8. The content delivery system as defined in claim 2 or 5, wherein the images contain a moving image or a static image.

9. A conversion apparatus for use in a content delivery system that delivers a plurality of contents to a terminal through a network, the apparatus comprising:
a processing unit that synthesizes the received plurality of contents, and outputs the synthesized contents to the terminal.

10. The conversion apparatus as defined in claim 9, wherein the plurality of contents includes images and the conversion apparatus synthesizes the images of the plurality of contents.

11. The conversion apparatus as defined in claim 10, wherein the processing unit comprises a decoding unit that decodes the plurality of contents, a size conversion unit that converts screen sizes of the images of the decoded plurality of contents, a synthesis unit that synthesizes the size-converted images of the plurality of contents into one image, and an encoding unit that re-encodes the image, and wherein the processing unit outputs the image stream after the re-encoding, to the terminal.

12. The conversion apparatus as defined in claim 9, wherein:
the content delivery system delivers at least one of advertisement contents in addition to the plurality of contents; and
the processing unit synthesizes at least one of the received plurality of contents and the received advertisement content, and outputs the synthesized contents to the terminal.

13. The conversion apparatus as defined in claim 12, wherein the plurality of contents and the advertisement content include images and the conversion apparatus synthesizes at least one of the images of the plurality of contents and the image of the advertisement content.

14. The conversion apparatus as defined in claim 13, wherein the processing unit comprises a decoding unit that decodes the at least one of the plurality of contents and the advertisement content, a size conversion unit that converts screen sizes of the images of the decoded plurality of contents and the image of the decoded advertisement content, a synthesis unit that synthesizes the size-converted images of the plurality of contents and the size-converted image of the advertisement content into one image, and an encoding unit that re-encodes the image, the processing unit outputs the image stream after the re-encoding, to the terminal.

15. The conversion apparatus as defined in 10 or 13, wherein the images contain a moving image or a static image.

16. A content delivery method of delivering a plurality of contents from a delivery server to a terminal through a network, the method comprising:
synthesizing the plurality of contents delivered from the delivery server, and outputting the synthesized contents to the terminal.

17. The content delivery method as defined in claim 16, wherein the plurality of contents includes images and the method comprises synthesizing the images of the plurality of contents.

18. The content delivery method as defined in claim 17, wherein screen sizes of the images of the plurality of contents are converted, the converted images of the plurality of contents are synthesized into one image, the image is re-encoded, and then the image stream after the re-encoding is output to the terminal.

19. The content delivery method as defined in claim 16, wherein
the delivery server delivers at least one of advertisement contents in addition to the plurality of contents, and
the method comprises synthesizing at least one of the plurality of contents and the advertisement content delivered from the delivery server, and outputting the synthesized contents to the terminal.

20. The content delivery method as defined in claim 19, wherein the plurality of contents and the advertisement content include images and the method synthesizes at least one of the images of the plurality of contents and the image of the advertisement content.

21. The content delivery method as defined in claim 19, wherein the screen sizes of the image of the at least one of the plurality of contents and the image of the advertisement content are converted, the converted image of the at least one of the plurality of contents and the converted image of the advertisement content are synthesized into one image, the image is re-encoded, and then the image stream after the re-encoding is output to the terminal.

22. The content delivery method as defined in any one of claims 16-21, further comprising:
generating position information by managing a position of the terminal, and wherein
when the terminal has moved, the delivery server changes the contents on the basis of the position information of the terminal, and delivers the changed contents.

23. The content delivery method as defined in claim 17 or 20, wherein the images contain a moving image or a static image.
